Europäisches Patentamt

European Patent Office

Office européen des brevets

(11) Numéro de publication : **0 389 325 B1**

## (12) FASCICULE DE BREVET EUROPEEN

(45) Date de publication du fascicule du brevet :
**21.06.95 Bulletin 95/25**

(21) Numéro de dépôt : **90400601.2**

(22) Date de dépôt : **05.03.90**

(51) Int. Cl.⁶ : **G01S 13/84**

(54) **Procédé et dispositif pour l'aide à la circulation de véhicules terrestres.**

(30) Priorité : **21.03.89 FR 8903700**

(43) Date de publication de la demande :
**26.09.90 Bulletin 90/39**

(45) Mention de la délivrance du brevet :
**21.06.95 Bulletin 95/25**

(84) Etats contractants désignés :
**AT BE CH DE DK ES GB GR IT LI LU NL SE**

(56) Documents cités :
**DE-A- 2 746 776
FR-A- 2 248 517
FR-A- 2 353 863
FR-A- 2 562 694
US-A- 2 837 736
US-A- 4 242 661
35TH IEEE VEHICULAR TECHNOLOGY
CONFERENCE, Boulder, Colorado, 21-23 mai
1985,pages 285-291, IEEE, New York, US; D.J.
REITZ: "Automatic vehicle identification technology and applications"**

(73) Titulaire : **DASSAULT AUTOMATISMES ET
TELECOMMUNICATIONS
9, rue Elsa Triolet
Z.I. Les Gatines
F-78370 Plaisir (FR)**

(72) Inventeur : **Commissaire, Henri
4, Place Louis Renault
F-78990 Elancourt (FR)**
Inventeur : **Pathier, Pierre
15, allée des Primevères,
Le Pré Fleuri
F-91570 Bievres (FR)**
Inventeur : **Sirven, Jacques
34, rue de L'Orangerie
F-78000 Versailles (FR)**

(74) Mandataire : **Plaçais, Jean-Yves et al
Cabinet Netter,
40, rue Vignon
F-75009 Paris (FR)**

## Description

L'invention concerne la circulation des véhicules terrestres.

Il est inutile d'insister ici sur le nombre et la gravité des accidents de circulation. Depuis des années, on recherche un système qui soit à la fois fiable, efficace, et non excessivement contraignant, et qui permette de réduire le risque de collisions entre véhicules, et plus généralement le nombre d'accidents de circulation.

Très tôt, il a été envisagé d'utiliser des radars sur les véhicules, à des fins d'anti-collisions. Un exemple en est l'objet décrit dans la revue Electronics, février 1974, intitulé "Radar in auto on collision course tightens passengers seat belts". La lecture de ce document révèle les difficultés du problème.

Ces difficultés sont fondamentales en matière de circulation routière, les corps susceptibles de se rencontrer (en collision) peuvent être animés de positions, et de vecteurs vitesse (à considérer à la fois en direction et en amplitude) extrêmement variables. Il faut donc acquérir des informations fiables, exhaustives, mais en nombre suffisamment limité, sur les situations susceptibles d'engendrer une collision.

En l'espèce, certains objets fixes peuvent être aussi importants que les objets mobiles.

Le radar doit alors effectuer une reconnaissance quasi totale des objets fixes et mobiles qu'il perçoit, à partir de leur "signature radar". Ce problème est actuellement non résolu.

De plus, le risque principal de collision est lié à des objets se déplaçant à faible vitesse, transversalement à la direction d'observation. Or, la vitesse radiale de tels objets étant quasi-nulle, un radar les distingue difficilement des objets fixes.

Par ailleurs, toute application du radar est caractérisée par un "taux de fausses alarmes". Si ce taux est maintenu très bas, alors des situations dangereuses ne seront pas indiquées au pilote du véhicule. Inversement, s'il est trop élevé, le pilote va perdre confiance dans le radar qui l'assiste.

La recherche d'un compromis satisfaisant, compte tenu de la variété des situations de collision potentielle, est donc extrêmement délicate.

Jusqu'à présent, pratiquement aucune solution commerciale n'a vu le jour ou connu un grand développement, à cause de la complexité du problème. Par exemple, le document US-A-4 242 661 décrit un enregistreur d'objets qui enregistre de manière séquentielle des codes relatifs à des objets mobiles. Des répondeurs équipent les objets qui passent les uns après les autres devant l'interrogateur équipé d'un radar.

La présente invention a précisément pour but de faire avancer la technique vers une solution, en proposant des moyens nettement mieux adaptés à la détection de situations susceptibles d'engendrer une collision.

Selon une définition générale de l'invention, le procédé pour l'aide à la circulation de véhicules terrestres est caractérisé conformément à la revendication 1.

De préférence, chaque répondeur réémet de façon semi-continue. En outre, pour au moins une classe de corps non munis d'un radar, il est prévu d'équiper certains au moins de ces corps de répondeurs individuels différents de ceux équipant lesdits véhicules, et spécifiques de cette classe. Dans ce cas, à chaque classe de corps est associée une fréquence nominale de transposition spécifique.

Très avantageusement, certains au moins des répondeurs sont propres à coder les ondes qu'ils réémettent et le radar décode les ondes ainsi reçues des répondeurs.

Selon un premier mode de réalisation de l'invention, le radar émet une onde porteuse modulée par inversion de phase selon un code pseudo-aléatoire sélectivement associé au véhicule, et effectue sur les retours une compensation de la ou des transpositions, suivie d'une corrélation avec ledit code pseudo-aléatoire pour obtenir la mesure de distance.

Selon un second mode de réalisation de l'invention, le radar émet simultanément deux ondes porteuses voisines, sélectivement associées au radar, et effectue sur les retours une mesure de l'écart de phase entre les ondes porteuses reçues pour obtenir la mesure de distance.

L'invention concerne aussi des dispositifs pour la mise en oeuvre de l'invention, interrogateur aussi bien que répondeur, conformément à l'une des revendications 15 à 33.

D'autres caractéristiques et avantages de l'invention apparaîtront à la lecture de la description détaillée ci-après, et des dessins annexés dans lesquels :

- la figure 1 représente schématiquement une situation de circulation intéressant deux véhicules, un piéton et une balise ;
- la figure 2 représente schématiquement les corps de la figure 1 équipés de radars et/ou de répondeurs selon l'invention ;
- la figure 3 représente schématiquement le premier mode de réalisation du dispositif conforme à l'invention ;
- la figure 4 représente des chronogrammes illustrant les signaux du radar selon le premier mode de réalisation du dispositif conforme à l'invention ;
- la figure 5 représente schématiquement la bande de transposition des répondeurs pour radars selon le premier mode de réalisation du dispositif conforme à l'invention ;
- la figure 6 représente schématiquement le second mode de réalisation du dispositif conforme à l'invention ;

- la figure 7 représente la bande de transposition des répondeurs pour radars selon le second mode de réalisation du dispositif conforme à l'invention ,
- la figure 8 représente schématiquement des dispositions des sources de réception selon l'invention ; et
- la figure 9 illustre le schéma détaillé du récepteur de l'un ou l'autre des modes de réalisation du dispositif selon l'invention.

Les dessins annexés comportent à de nombreux titres des informations de caractère certain. Ils pourront en conséquence non seulement servir à mieux faire comprendre la description détaillée ci-après, mais aussi contribuer à la définition de l'invention, le cas échéant.

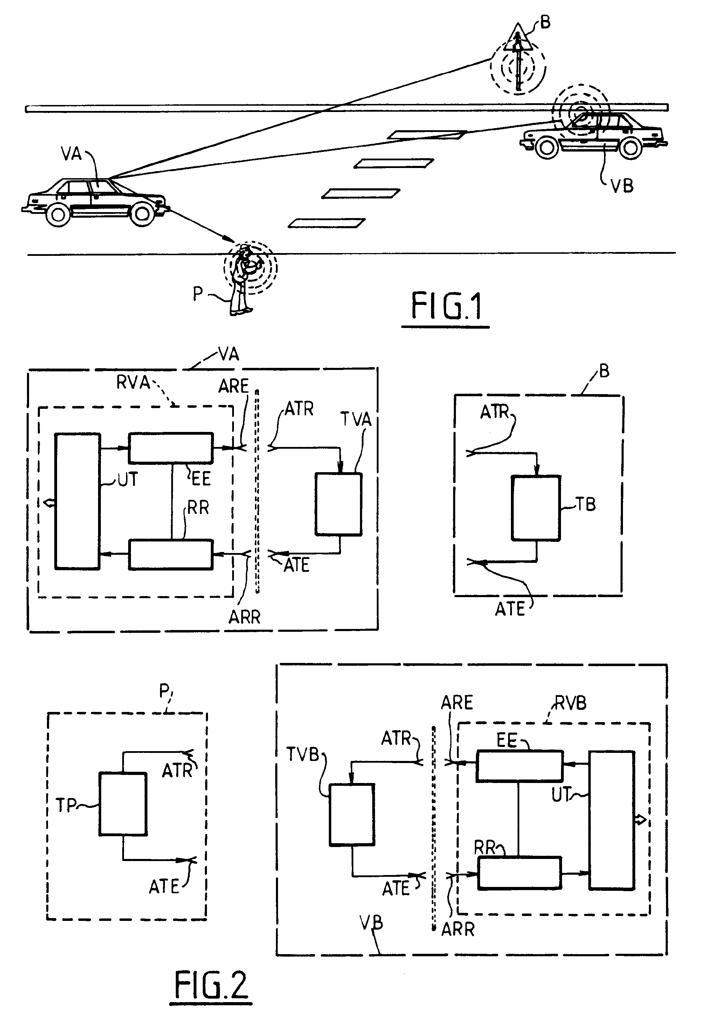

Sur la figure 1, les références VA et VB désignent respectivement deux véhicules circulant en sens opposés sur une voie.

Sur l'un des bas-côtés de la voie, un piéton P est sur le point de traverser la voie au niveau d'un passage protégé. Sur l'autre bas-côté de la voie, une balise B signale ledit passage protégé.

En fonction de l'évolution de leurs positions relatives, les corps VA, VB, P et B peuvent venir en situation de collision potentielle. C'est ce que l'invention cherche à détecter.

On se réfère maintenant à la figure 2. Il est prévu d'équiper respectivement les véhicules VA et VB d'un radar de bord RVA et RVB ainsi que d'un répondeur large bande TVA et TVB.

Tout d'abord les radars RVA et RVB interrogent l'espace qui les entoure en émettant chacun de façon semi-continue des ondes qui serviront à la mesure d'une distance sur une portée de plusieurs centaines de mètres.

Ensuite, le répondeur TVB transpose en fréquence les ondes radar reçues du véhicule VA. De même, le répondeur TVA transpose en fréquence les ondes radar reçues du véhicule VB.

Enfin, les radars reçoivent les retours transposés pour effectuer sur ceux-ci la mesure de distance.

Les radars RVA et RVB comportent chacun des moyens d'émission ARE, des moyens de réception ARR, un module émetteur EE, un module récepteur RR, et une unité de traitement UT.

Les répondeurs TVA et TVB comprennent chacun des moyens d'émission ATE, des moyens de réception ATR et un réémetteur avec transposition en fréquence.

La semi-continuité de l'émission des radars permet non seulement de réduire la consommation desdits radars mais surtout d'apporter un début de solution au problème de la saturation dudit radar, en présence de répondeurs actifs.

En effet, l'homme de l'art comprendra facilement qu'un radar émettant de façon semi-continue est moins sujet à saturer qu'un radar fonctionnant de façon continue, en présence d'un nombre important d'autres interrogateurs et répondeurs.

Pour contribuer à la solution du problème de saturation des radars, chaque répondeur réémet de façon également semi-continue.

La Demanderesse souhaite éviter aussi la collision entre véhicules et piétons et/ou éléments du décor, problème quasi-insoluble avec les radars de la technique antérieure. Pour cela, il est prévu de munir d'un répondeur individuel de préférence différent de ceux des véhicules, certaines classes d'objets non munis d'un radar.

Plus précisément, le piéton P est équipé d'un répondeur TP, par exemple, logé dans un bracelet-montre.

Certains éléments du décor peuvent également être équipés de répondeurs pour signaler un obstacle particulier tel qu'un passage à niveau, un passage protégé ou un virage dangereux. Par exemple, un répondeur est installé sur la balise B signalant le passage protégé.

Les répondeurs pourront ainsi permettre de distinguer plusieurs classes d'objet, en particulier par le fait qu'ils utilisent des fréquences de transposition différente. En outre, les problèmes de saturation éventuelle sont alors distincts pour les différentes classes d'objets. Dans la suite, on suppose que deux fréquences de transposition différentes sont utilisées, bien que trois fréquences de transposition soient préférables (véhicules, piétons, balises).

Il existe de nombreuses techniques de radar qui soient propres à une mesure de distance.

Le radar équipant les véhicules selon l'invention utilise préférentiellement l'une des deux techniques suivantes :
- émission d'une onde porteuse modulée selon un code pseudo-aléatoire, ou
- émission simultanée de deux fréquences faiblement espacées.

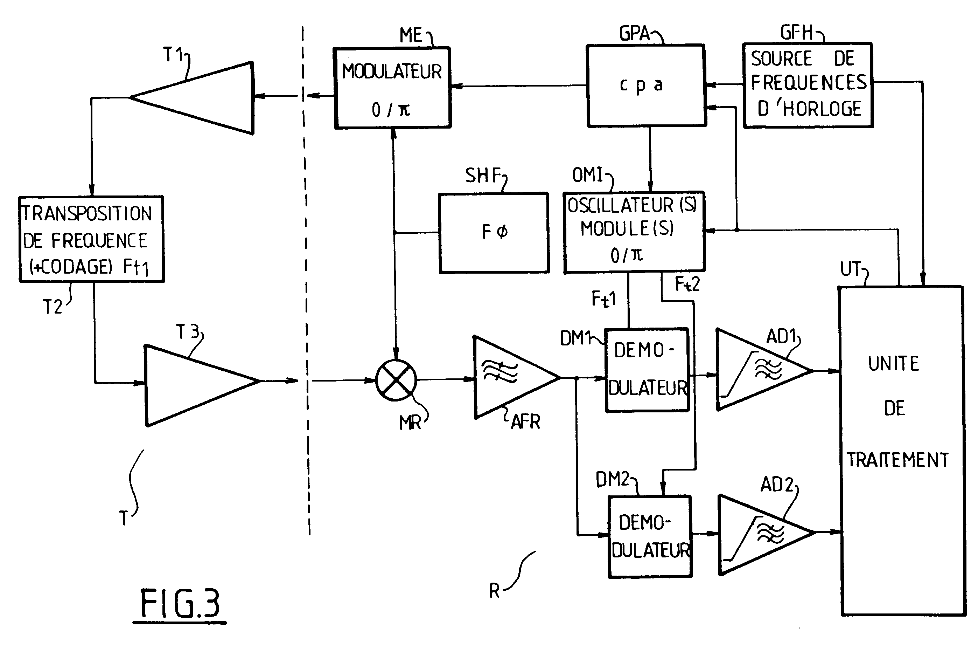

Sur la figure 3, on a représenté un radar à onde porteuse modulée selon un code pseudo-aléatoire.

Une source de fréquences et d'horloge GFH engendre à partir d'une même référence temporelle des horloges utiles aux différents circuits numériques du radar, et des valeurs de fréquence éventuellement utiles sous forme analogique. Cette source GHF cadence l'horloge d'un générateur de code pseudo-aléatoire GPA qui délivre à sa sortie un code pseudo-aléatoire cpa spécifique au radar. Ce code possède une période Fcpa, à laquelle on associe une fréquence ou taux de répétition Fcpa. La cadence de l'horloge de code est notée Fm.

Un générateur SHF génère une hyperfréquence de base $F\phi$ de l'ordre de 1 gigahertz.

Cette fréquence $F\phi$ est appliquée à un modulateur ME qui module par inversion de phase ladite fréquence de base $F\phi$ selon les bits successifs du code pseudo-aléatoire cpa reçu par le modulateur ME.

L'onde porteuse fondée sur la fréquence Fφ ainsi modulée par le code cpa est émise par le radar R.

La fréquence d'horloge Fm du générateur pseudo-aléatoire GPA est de l'ordre de 7,5 mégahertz. Ainsi, le spectre d'émission du radar est de l'ordre de Fφ ± 7,5 mégahertz.

L'onde porteuse ainsi émise par le radar R est reçue par un répondeur T équipant un autre véhicule ou bien un piéton ou une balise.

Des moyens d'amplification T1 amplifient le signal ainsi reçu par une antenne non représentée.

Un réémetteur à transposition de fréquence T2 relié aux moyens d'amplification T1, transpose en fréquence le signal amplifié par T1.

Le répondeur T réémet enfin le signal transposé via des moyens d'amplification T3 reliés au réémetteur T2.

La transposition en fréquence peut être effectuée selon une modulation à bande latérale unique, ce qui permet de réaliser des répondeurs simples, peu encombrants et peu coûteux.

La fréquence de transposition des répondeurs est spécifique à la classe des corps porteurs de tels répondeurs.

Par exemple, les répondeurs portés par des piétons ont une fréquence de transposition $Ft_1$ de l'ordre de 15 mégahertz alors que les répondeurs portés par les véhicules ont une fréquence de transposition de l'ordre de 30 mégahertz.

Le réémetteur à transposition de fréquence peut réémettre de façon semi-continue par exemple selon un rapport de forme de 1/10ème, c'est-à-dire que le réémetteur est actif seulement pendant 10% de son temps.

La puissance de crête du réémetteur équipant les véhicules peut être supérieure ou égale à 10 mW, celle des réémetteurs équipant les piétons peut être supérieure ou égale à 0,1 mW.

La bande de travail du répondeur est située autour du gigahertz, avec une largeur de bande d'au moins une dizaine de mégahertz environ.

Le facteur de bruit du répondeur est de l'ordre de 10 décibels.

A la réception, le radar de bord du véhicule reçoit, par une antenne (non représentée) des retours éventuels qui seront en principe à une fréquence $Fφ + Ft_1$ modulée par le code cpa à la fréquence Fcpa, $Ft_1$ désignant une valeur de fréquence de transposition d'un répondeur.

Tout d'abord, un mélangeur MR recevant comme signal local Fφ va fournir à sa sortie une fréquence de la forme $Ft_1$ modulée à la fréquence Fcpa, et d'autres raies, qui seront filtrées par des moyens de filtrage AFR de type amplificateur linéaire. Les moyens de filtrage AFR fournissent une fréquence intermédiaire FI représentative de la fréquence de transposition modulée par un code pseudo-aléatoire de fréquence Fcpa.

Un oscillateur OMI, modulé par inversion de phase selon le code pseudo-aléatoire, produit un signal de démodulation distance possédant les fréquences de transposition telles que $Ft_1$ et $Ft_2$ associées respectivement aux piétons et aux véhicules.

Les sorties de l'oscillateur OMI seront donc des signaux locaux de la forme $Ft_1$ modulé à la fréquence Fcpa, et $Ft_2$ modulé à la fréquence Fcpa, respectivement.

Un démodulateur DM1 associé à la fréquence de transposition $Ft_1$, démodule les retours en fréquence intermédiaire à l'aide du signal local de démodulation distance $Ft_1$ modulé à la fréquence Fcpa produite par l'oscillateur OMI.

Un démodulateur DM2 associé à la fréquence de transposition $Ft_2$ démodule les retours en fréquence intermédiaire à l'aide du signal local de démodulation distance $Ft_2$ modulé à la fréquence Fcpa produite par l'oscillateur OMI.

Des moyens de filtrage AD1 et AD2 de type amplificateur limiteur filtrent respectivement les signaux démodulés par DM1 et DM2.

Après cela, les signaux ainsi démodulés et filtrés sont reçus par une unité de traitement UT qui décale le code pseudo-aléatoire cpa jusqu'à obtenir une relation prédéterminée de phase après la seconde démodulation.

L'homme de l'art sait que ce décalage du code pseudo-aléatoire dépend essentiellement de la distance. Sa mesure s'effectue néanmoins sur un signal affecté par l'effet Doppler, ainsi que par la dispersion de la fréquence de transposition des répondeurs.

L'invention ignore l'effet Doppler. Les filtres AD1 et AD2 peuvent avoir une largeur de bande de 7,5 kHz, ce qui couvre largement les écarts énoncés ci-dessus. Dans ces conditions, il n'est pas nécessaire d'acquérir le résidu de fréquence porteuse avant la démodulation du code pseudo-aléatoire.

Ensuite, l'unité de traitement traite le décalage, de manière à l'échantillonner, et le numériser. Enfin, l'unité de traitement informe le conducteur des différents corps, véhicules, piétons, balises qui peuvent constituer des obstacles ou engendrer une collision.

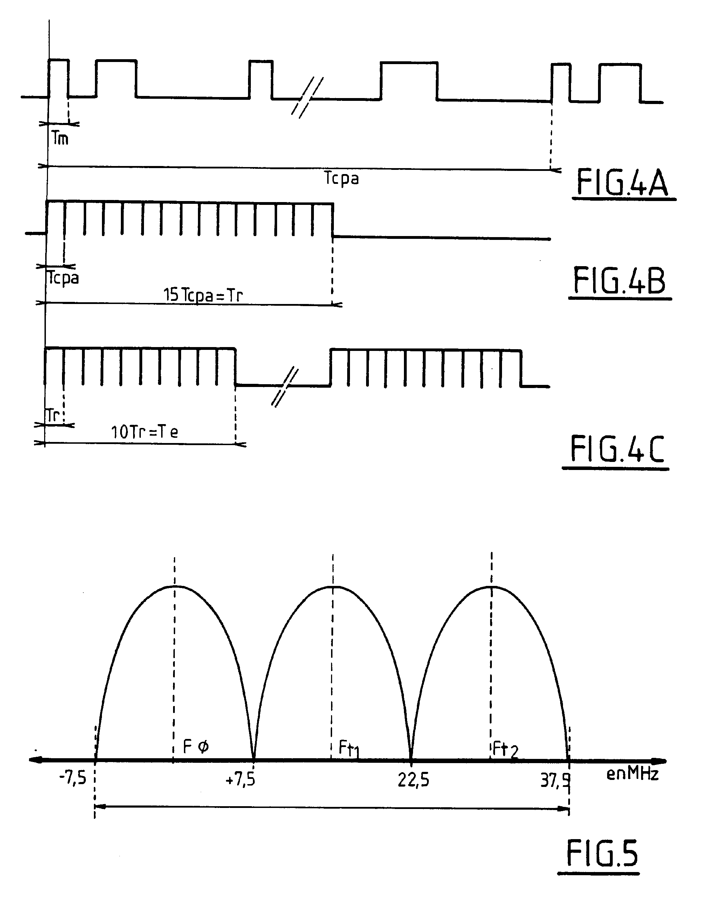

On se réfère maintenant à la figure 4 qui représente des chronogrammes illustrant le code pseudo-aléatoire.

Sur la partie A de la figure 4, on a représenté le chronogramme d'un code pseudo-aléatoire selon l'invention.

Il s'agit, d'une succession (ou paquet) de bits ayant par exemple une durée élémentaire Tm de 0,133 microseconde, chacun, avec une périodicité globale de 1000 bits s'étendant sur une durée Tcpa égale à 133 microsecondes. Il s'ensuit un spectre de modulation de ± 7,5 MHz (1/0,133 microseconde).

Sur la partie B de la figure 4, on a représenté un chronogramme illustrant 15 périodes consécutives du code pseudo-aléatoire d'une durée individuelle Tcpa de 133 microsecondes. Ces 15 périodes ont une durée globale Tr de 2 ms.

Sur la partie C de la figure 4, on a représenté un chronogramme illustrant un segment d'émission, comprenant 150 périodes du code pseudo-aléatoire, soit 10 cycles de 2 ms.

Le facteur de forme des répondeurs étant 1/10 (ils répondent pendant 1/10 du temps d'émission), le segment d'émission permet en principe de traiter jusqu'à 10 répondeurs.

Le facteur de forme des radars interrogateurs étant 1/10, l'invention permet en principe un fonctionnement "contemporain" pour jusqu'à 10 radars.

L'équivalent en distance de la durée Tm d'un bit du code pseudo-aléatoire est $\frac{c\,Tm}{2}$, c étant la vitesse de la lumière, c'est-à-dire 20 m. La plage distance analysable est 15 fois supérieure soit 300 m. L'ambiguïté distance est reliée à la période du code pseudo-aléatoire, ou bien à son nombre de bits, soit 1000 x 20 m = 20 km.

En fait, l'homme de l'art sait que l'on peut détecter des décalages temporels d'un code pseudo-aléatoire avec une précision meilleure que la durée d'un bit. En l'espèce, la précision peut atteindre 5 m.

Il peut être associé à chaque radar un code pseudo-aléatoire différent. On peut ainsi prévoir une ou plusieurs dizaines de codes différents, décorrélés, c'est-à-dire non déductibles les uns des autres par translation temporelle. Chaque véhicule reçoit l'un de ces codes en mémoire permanente (ou un mot générateur d'un tel code).

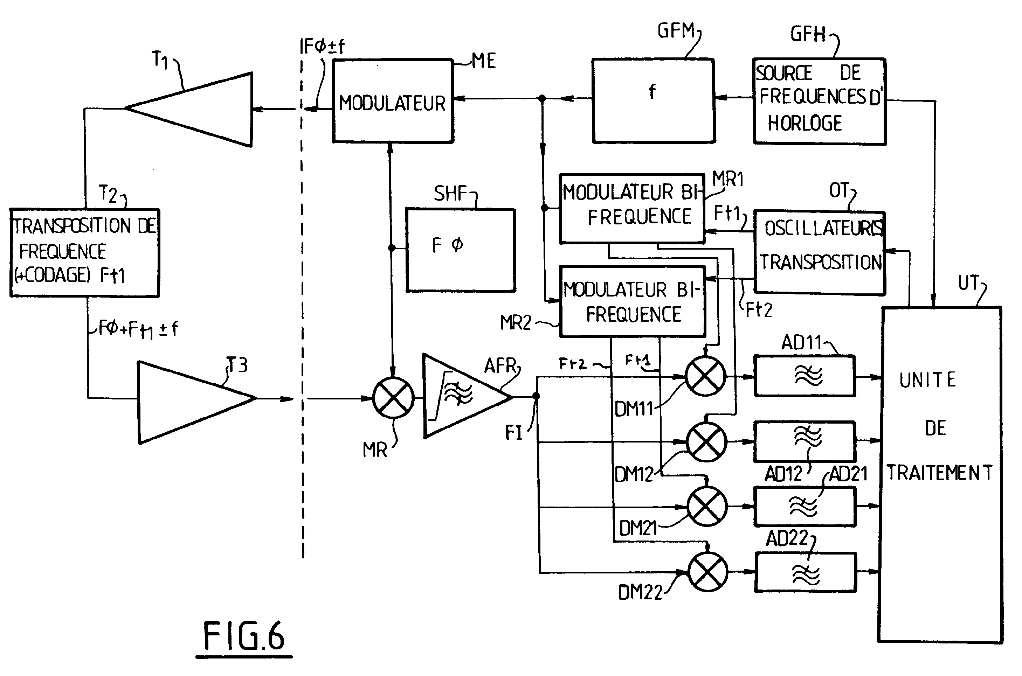

On se réfère maintenant à la figure 5 qui représente un chronogramme illustrant la bande de travail du radar ainsi que des répondeurs.

La bande de travail du radar est située autour de 1 gigahertz ($F\phi$) avec une largeur de bande de $\pm\,7{,}5$ mégahertz.

La bande de travail des répondeurs individuels est située autour de $F\phi + Ft_1 \pm 7{,}5$ mégahertz avec $Ft_1 = 15$ mégahertz.

La bande de travail des répondeurs portés par les véhicules est située autour de $F\phi + Ft_2$ avec une largeur de bande de $\pm\,7{,}5$ mégahertz avec $Ft_2 = 30$ mégahertz.

Il est maintenant fait référence aux figures 6 et suivantes, pour la description d'un second mode de réalisation de l'invention.

La différence essentielle entre ce second mode de réalisation et le précédent concerne l'acquisition des informations distance par le radar, qui repose sur des principes différents. Par contre, beaucoup des aspects généraux de l'invention sont en commun, remarque étant faite cependant que les deux modes de réalisation ont des avantages respectifs.

Sur la figure 6, on retrouve un bloc GFH servant à engendrer à partir d'une même référence temporelle des horloges utiles aux circuits numériques, et des valeurs de fréquence éventuellement utiles sous forme analogique.

Ce circuit GFH est relié à un générateur de fréquence de modulation GFM, dont la sortie va être un signal de fréquence f de forme en principe sinusoïdale.

La source hyperfréquence SHF fournit comme précédemment la fréquence $F\phi$. Cette fréquence est appliquée à un modulateur d'émission ME, qui reçoit par ailleurs la fréquence dite de modulation f. La sortie du modulateur ME fournit donc finalement comme signal émis une fréquence $F\phi \pm f$. C'est-à-dire que l'onde émise va se composer de deux raies F1 et F2 dont les fréquences seront respectivement $F\phi + f$ et $F\phi - f$.

L'homme de l'art comprendra que ceci suppose une suppression totale de la porteuse $F\phi$ en sortie du modulateur ME.

Le répondeur peut posséder exactement la même structure que pour la figure 3, sauf éventuellement des ajustements dans les largeurs de bandes de filtrage et dans la valeur de la fréquence de transposition.

A la réception, le radar de bord du véhicule reçoit, par une antenne (non représentée), des retours éventuels qui seront en principe à une fréquence $F\phi \pm f + Ft_1$, $Ft_1$ désignant une valeur de fréquence de transposition d'un répondeur.

Tout d'abord, un mélangeur MR recevant comme signal local $F\phi$ va fournir à sa sortie une fréquence de la forme $Ft_1 \pm f$, et d'autres raies, qui seront filtrées par un amplificateur AFR. La sortie de ce dernier est donc un signal FI possédant seulement la composante $Ft_1 \pm f$.

Le circuit comporte par ailleurs un oscillateur auxiliaire OT, capable de fournir la valeur de la fréquence de transposition $Ft_1$ qui vient d'être examinée, ainsi qu'une ou plusieurs autres valeurs de fréquences de transposition telles que $Ft_2$.

Deux modulateurs bi-fréquence MR1 et MR2 vont alors moduler ces fréquences $Ft_1$ et $Ft_2$ par la sortie f du générateur GFM, de la même manière que cela a été fait pour le modulateur d'émission ME, mais à une puissance bien inférieure.

Les sorties des modulateurs MR1 et MR2 seront donc des signaux locaux de la forme $Ft_1 \pm f$, et $Ft_2 \pm f$, respectivement.

On s'intéressera pour le moment au premier signal $Ft_1 \pm f$, dont les deux raies sont disponibles sur deux voies séparées appliquées respectivement aux mélangeurs DM11 et DM12. Ceux-ci vont donc réaliser une démodulation synchrone du signal FI qui est précisément de la forme $Ft_1 \pm f$ (sauf à considérer l'effet Doppler, et la dispersion des fréquences de transposition).

Les sorties de ces deux mélangeurs sont donc des signaux de basse fréquence, que l'on va pouvoir filtrer dans des filtres passe-bas respectifs AD11 et AD12, (de bande environ 7,5 kHz par exemple).

Après cela, l'unité de traitement UT va mesurer la différence de phase entre les deux voies.

L'homme de l'art sait que cette différence de phase dépend de la distance.

Les choses se passent exactement de même pour la seconde voie, avec les mélangeurs DM21 et DM22, recevant des composantes $Ft_2 \pm f$ du modulateur MR2, et suivis respectivement des filtres passe-bas AD21 et AD22.

L'appareil est ainsi en mesure de déterminer la distance de tout répondeur qui lui renvoie un signal transposé.

Dans le premier mode de réalisation, il résultait nécessairement de l'usage de séquences ou codes pseudo-aléatoires un étalement spectral qui rendait nécessaire le partage total de l'ensemble de la bande de travail entre tous les radars et répondeurs.

Il est bien sûr possible de faire de même avec le second mode de réalisation.

Mais celui-ci s'accommode aussi d'une variante plus intéressante, réduisant les risques d'interférences, dans l'hypothèse où deux radars ou bien deux répondeurs réagiraient simultanément.

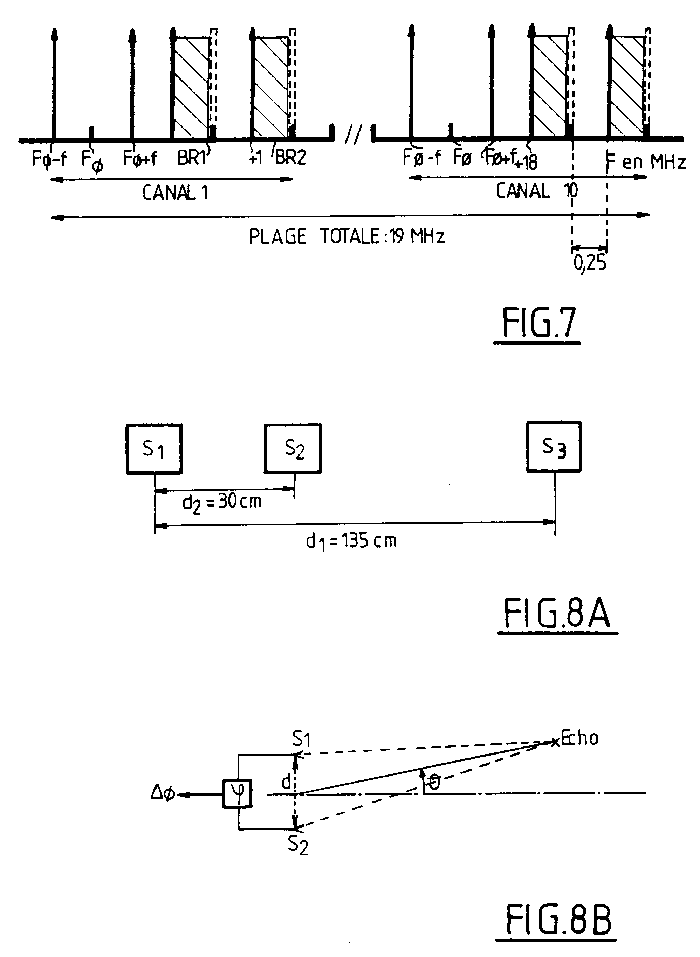

Cette variante est illustrée sur la figure 7, où l'on voit que la bande de travail ou "plage totale" s'étend sur 19 mégahertz. Mais celle-ci est divisée par exemple en dix canaux faisant chacun 1,9 mégahertz. Dans chaque canal, on définit une valeur particulière de la fréquence de base $F\phi$, tandis que f est le même pour tous. On voit en $F\phi - f$ et en $F\phi + f$ les deux raies émises par un radar utilisant cette sous-bande ou "canal 1". En BR1 et BR2 sont représentées les bandes de fréquence utilisées par des répondeurs travaillant avec la fréquence de transposition $Ft_1$. On peut naturellement étendre le spectre à d'autres fréquences de transposition.

Ceci peut être répété à l'identique sur les 10 canaux utilisés, par simple translation de fréquence.

L'avantage est que 10 fréquences d'émission (ou plus) sont disponibles pour les radars. Lorsque deux radars de véhicules vont se trouver suffisamment proches, et qu'il adviendra qu'ils émettent en même temps, le risque d'interférences entre leurs émissions est diminué pratiquement dans le rapport du nombre des canaux découpés dans la plage totale de travail.

En pratique, la fréquence de base $F\phi$ a une valeur de l'ordre de 1 gigahertz tandis que f a une valeur de 250 kilohertz. Les fréquences de transposition $Ft_1$ et $Ft_2$ ont respectivement pour valeur 1 mégahertz et 2 mégahertz par exemple.

On peut ainsi placer 50 sous canaux de répondeurs, espacés de 10 kHz, à l'intérieur d'un même canal d'émission.

Sur la figure 6, la sélectivité vis-à-vis de ces sous-canaux est réalisée au niveau de l'unité de traitement UT, la reconnaissance de fréquence étant assurée par transformée de Fourier rapide.

En principe, une seule valeur de f est utilisée sur toute la bande de travail. Si l'on accepte que les radars ne soient pas d'un modèle standard, il est possible d'utiliser différentes valeurs de f, à raison d'une par radar, pourvu que les cadences de traitement numérique soient multiples de f.

En outre, un même radar peut utiliser f et différentes valeurs multiples de f, pour ajuster sa sensibilité en distance en fonction de l'environnement.

On reviendra plus loin sur d'autres aspects de ces questions touchant à l'interférence entre radars et/ou répondeurs.

On considérera maintenant un autre aspect de l'invention, qui intéresse le mode de travail des aériens qu'elle utilise.

L'aérien utilisé pour un répondeur sera en principe un aérien unique, tel qu'une antenne-fouet, associée à un duplexeur pour permettre aussi bien la réception que la réémission.

Au niveau des radars de véhicules, que l'on peut appeler également "interrogateurs", plusieurs dispositions sont possibles.

Dans une mise en oeuvre simple de l'invention, on peut considérer que le risque de collisions rencontré par un véhicule est essentiellement situé vers l'avant. Il suffit alors à l'interrogateur d'une antenne unique, directionnelle, sensible essentiellement à ce qui se passe vers l'avant, là encore associée à un duplexeur lui permettant d'agir aussi bien en émission qu'en réception.

Une version plus évoluée de l'invention fera usage d'un système d'antennes permettant une détection angulaire, de préférence à la façon d'une interférométrie.

On disposera alors deux aériens, placés respectivement à l'avant et à l'arrière du véhicule interrogateur, et ayant par exemple une ouverture angulaire de l'ordre de 120°, symétrique de part et d'autre de l'axe longitudinal du véhicule.

Cette plage permet par exemple de détecter un véhicule répondeur placé à 250 m d'un croisement de routes perpendiculaires, pour une distance d'analyse maximum de 300 m (en limite de portée angulaire, c'est-à-dire pour un angle d'incidence proche de 60° par rapport à l'axe du véhicule).

Par homogénéité avec la mesure de distance, il est souhaitable que la précision angulaire soit de l'ordre de 5 m à la distance maximale d'analyse de 300 m, ce qui correspond à une précision de l'ordre du degré d'angle.

En admettant qu'on utilise une antenne classique de CASSEGRAIN, opérant en mode de traitement mono-impulsion ("monopulse"), le lobe d'antenne nécessaire serait d'environ 10°, soit une dimension de l'ordre de 2 m dans le plan gisement.

Il est clair que cette dimension est pratiquement prohibitive à bord d'un véhicule, d'autant plus que la couverture angulaire de 120° nécessiterait un balayage angulaire.

Il est donc préféré d'utiliser un réseau de sources élémentaires à large diagramme (120°) pour réaliser un interféromètre dans le plan gisement.

A cet effet, on utilisera une antenne d'émission, et trois antennes ou sources de réception, et ceci pour chaque zone éclairée d'une dimension de 120° en gisement, à l'avant aussi bien qu'à l'arrière du véhicule.

Les trois sources S1, S2 et S3 peuvent être alignées, et séparées par exemple de 135 cm pour les plus distantes, la troisième source étant situées entre celles-ci, à une distance de 30 cm de l'une d'entre elles (figure 8A).

La source S1 servira par exemple de référence, tandis que les sources ou aériens S2 et S3 serviront pour les calculs permettant l'interférométrie.

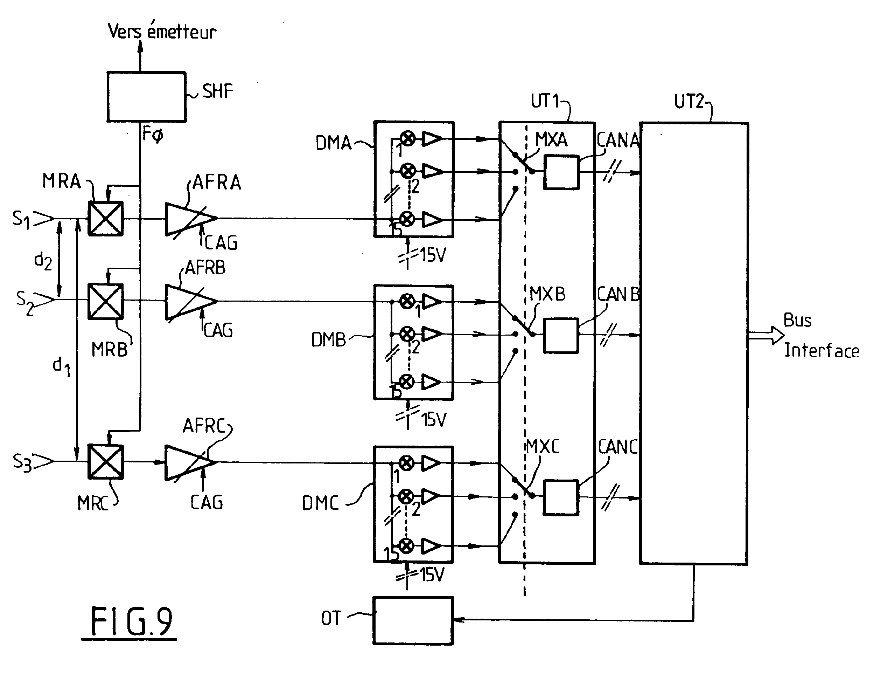

La figure 9 illustre alors le schéma détaillé du récepteur de l'un ou l'autre des modes de réalisation précédents, modifiés pour réaliser l'interférométrie.

Le mélangeur de réception MR de la figure 3 ou de la figure 6 est maintenant subdivisé en trois mélangeurs MRA, MRB et MRC, recevant la même source d'émission SHF à la fréquence $F\phi$, et respectivement associés aux trois antennes de réception S1, S2 et S3.

Ces mélangeurs sont suivis d'amplificateurs AFRA, AFRB et AFRC respectivement. Là encore, il peut s'agir soit de la figure 3, soit de la figure 6. Chacun de ces amplificateurs est pourvu d'une commande automatique de gain.

Ensuite, on trouve des blocs de démodulation DMA, DMB et DMC respectivement, recevant la fréquence de l'oscillateur de transposition OT ou OMI, par exemple sur 15 voies différentes.

A ce niveau, la représentation est plus spécialement reliée au mode de réalisation de la figure 3. On sait en effet que la démodulation de séquence pseudo-aléatoire suppose que l'on dispose d'un certain nombre de séquences décalées, que l'on pourra comparer individuellement, simultanément ou séquentiellement, à la séquence pseudo-aléatoire portée par la voie de réception correspondante. En l'espèce, on réalise l'analyse sur 15 voies simultanées, dans chacun des démodulateurs DMA, DMB et DMC.

Si l'on veut appliquer le même principe aux démodulateurs de la figure 6, il convient d'utiliser deux sous-voies dans la voie S1, pour tenir compte de l'existence de deux fréquences de la forme $Ft_1 \pm f$. Les deux autres voies S2 et S3 peuvent ne prendre en compte que l'une des fréquences $Ft_1 \pm f$.

Après cela, les sorties des démodulateurs DMA à DMC sont appliquées respectivement à des voies de numérisation correspondantes incluses dans un bloc d'acquisition de données UT1, constitué essentiellement de multiplexeurs MXA, MXB et MXC, suivis de convertisseurs analogiques numériques CANA, CANB et CANC.

La sortie de ces convertisseurs, exprimée par exemple sur 8 bits, est enfin appliquée au bloc de traitement numérique proprement dit UT2, lequel peut être relié à un bus d'interface pour le traitement des données par un calculateur de bord.

Il est maintenant fait référence à la figure 8B, où l'on a fait apparaître deux des antennes de réception utilisées, par exemple S1 et S2. Le déphasage électrique delta phi entre ces deux voies est donné par la formule (I) annexée, où d désigne la distance du répondeur, lambda la longueur d'onde de l'émission (en principe à la fréquence de base $F\phi$) et delta le demi-angle au sommet du cône suivant lequel le répondeur voit les deux sources S1 et S2.

Dans la mesure où le rapport d/lambda est très supérieur à l'unité, ce déphasage delta phi peut effectuer plusieurs tours sur l'ensemble du domaine d'analyse distance. Il y a donc une ambiguïté sur la valeur delta phi, comme visible à l'examen de la formule (II) annexée, où N est un nombre entier représentant un coefficient d'ambiguïté, et alpha la mesure angulaire réelle.

Le recours à une troisième antenne de réception permet de lever cette ambiguïté, dans la mesure où l'on peut définir avec les trois antennes deux couples possédant des valeurs du coefficient d'ambiguïté N1 et N2 qui sont des nombres entiers premiers entre eux.

L'homme de l'art pourra vérifier que les valeurs numériques données plus haut satisfont ces conditions.

On s'intéressera maintenant à un aspect différent de l'invention, qui est lié à l'usage de répondeurs en liaison avec les radars interrogateurs.

L'homme de l'art sait qu'un système électromagnétique utilisant des interrogateurs et des répondeurs est sujet à une saturation, c'est-à-dire que le nombre de répondeurs analysables admet une limite supérieure.

Dans le cas présent, il convient bien entendu que cette limite supérieure soit compatible avec le problème posé, étant rappelé que celui-ci est particulièrement délicat.

Différents moyens peuvent être utilisés à cet effet.

Le premier moyen, déjà exposé, consiste de manière autonome, c'est-à-dire asynchrone, à faire en sorte que les interrogateurs ne fonctionnent que pendant une partie du temps (émission semi-continue), par exemple pendant 1/10ème du temps pour le premier mode de réalisation de l'invention, ou 1/3 du temps pour le second mode de réalisation de l'invention.

Un autre moyen consiste à faire en sorte que les répondeurs travaillent eux aussi en réémission semi-continue, avec par exemple un facteur de forme de 1/10ème du temps pour le premier mode de réalisation de l'invention aussi bien que pour le second.

Dans le cas du premier mode de réalisation de l'invention, l'usage de plusieurs codes pseudo-aléatoires différents, non déductibles par translation temporelle les uns des autres, permet encore de diviser le risque de saturation, d'un facteur qui est lié au nombre de ces codes. Ce nombre pourra être choisi par exemple égal à 10.

Dans le second mode de réalisation, on a déjà exposé que les interrogateurs peuvent travailler sur différents canaux d'émission, par exemple 10 canaux. Là aussi, le risque de saturation est divisé dans un facteur 10.

Le recours à ces moyens permet déjà de diminuer considérablement le risque de saturation.

Dans le premier mode de réalisation, on peut ainsi estimer la probabilité de présence de deux répondeurs identiques de la manière suivante :

La période de répétition de l'interrogateur Pr est définie par le produit du temps d'émission nécessaire Te par le facteur de forme à l'interrogation Fi. Fi est égal à 0,1. Te est égal à la durée du cycle du code Tm, par exemple 0,133 ms multiplié par le nombre de portes distance à analyser, par exemple 15, et multiplié à son tour par le facteur de forme du répondeur, par exemple 1/10ème. Il en résulte que Te est égal à 20 ms.

La période de répétition de l'interrogateur Tr s'établit alors à 200 ms.

Et la probabilité de présence P de deux répondeurs identiques est égale au facteur de forme Fi à l'émission 1/10ème, multiplié par le facteur de forme Fr à la réception 1/10ème, multiplié par l'inverse du nombre de portes distance à analyser soit 1/15ème, le résultat estimable étant de l'ordre de $6{,}6.10^{-4}$.

En pratique, on admettra que la probabilité de présence de deux répondeurs identiques est comprise entre $10^{-3}$ et $10^{-5}$.

Pour le second mode de réalisation de l'invention, un calcul analogue aboutit sensiblement au même résultat.

Le temps de l'émission de l'interrogateur Te est cette fois défini par le produit de l'inverse de la bande finale d'analyse (cet inverse étant égal 0,133 ms) multiplié par le nombre de sous-canaux des répondeurs qui est 50, et leur facteur de forme qui est 1/10ème. L'écart de fréquence entre deux sous-canaux est de 10 kilohertz de manière à couvrir l'écart de fréquence entre les deux raies $F\phi + f$ et $F\phi - f$.

Le temps d'émission est alors de 66,6 ms.

Le facteur de forme d'interrogation étant de 1/3, on retrouve comme période de répétition de l'interrogateur Pr, la même valeur de 200 ms que précédemment.

De même, la probabilité de présence P s'obtient par le produit de Fi par Fr et par l'inverse du nombre de sous-canaux, ce qui fournit la même valeur théorique que précédemment.

Ce qui précède explique les mots émission "sem-continue" et "réémission semi-continue", tels qu'utilisés dans la présente description. Il s'agit en fait de l'activité de l'émetteur radar ou du réémetteur du répondeur, qui n'est effective que pendant une fraction du temps.

Bien entendu, dans l'hypothèse où l'on viendrait à utiliser une forme d'onde d'émission radar modulée elle-même en tout ou rien, ces concepts d'émission ou réémission semi-continue s'appliqueraient tout aussi bien. La forme d'onde n'existerait que pendant les temps d'émission semi-continue.

Par ailleurs, ce côté semi-continu est avantageusement défini de façon asynchrone. Mais ont peut tempérer ce caractère asynchrone.

Ainsi des mesures complémentaires pourront permettre de diminuer encore d'une manière substantielle le risque et/ou les effets de deux réémissions simultanées de répondeurs.

On pourra par exemple prévoir que le répondeur d'un véhicule ne réémet pas pendant l'émission du radar du même véhicule.

On pourra également prévoir que l'émission d'un radar est interrompue en cas d'interférences non solubles à sa réception.

On pourra même encore envisager que, si le réémetteur d'un répondeur opère de façon semi-continue, son récepteur opère par contre de façon continue, du moins lorsqu'un tel répondeur est associé à un véhicule. Dans ce cas, la partie réception du répondeur peut être utilisée pour savoir s'il existe déjà un radar en train d'émettre dans une bande gênante, au moment où le radar du véhicule considéré se prépare lui-même à émettre.

D'après ce qui a été décrit jusqu'à présent, pour l'un ou l'autre des deux modes de réalisation, l'invention permet essentiellement de déterminer la distance (en variante l'angle) d'un objet par rapport à un interrogateur de bord d'un véhicule. Cet objet peut être fixe (par exemple une balise implantée sur le bord de la chaussée, ou à un croisement). Il peut être lentement mobile, comme un piéton. Il peut aussi s'agir d'un autre véhicule.

Pour une partie au moins des répondeurs, c'est-à-dire des classes d'objets considérés, et associés en principe à des fréquences de transposition qui les distinguent, il peut être utile de transmettre des informations supplémentaires. Ceci s'applique tout particulièrement au cas des véhicules, et on admettra maintenant que ces informations ne sont transmises que pour des véhicules, bien qu'elles soient également intéressantes pour des balises.

Les informations ainsi transmises seront par exemple la vitesse du véhicule, le cap du véhicule, ces deux premières informations pouvant être définies sous forme numérique avec une bonne résolution.

Les informations pourront également porter sur des ordres divers tels que décélération, ou encore changement de direction, l'information transmise pouvant alors être plus qualitative.

On pourra par exemple envisager d'indiquer si une décélération est de valeur faible, moyenne, forte ou ultra-forte (freinage d'urgence).

L'information quant au changement de direction pourra également posséder quatre valeurs seulement :
- pas de changement de direction,
- virage à gauche,
- virage à droite,
- simple changement de file dans la circulation,
à cela devraient s'ajouter des informations de synchronisation.

Avec les contraintes liées à la bande de travail définie plus haut, la Demanderesse estime actuellement que l'ensemble de ces informations peut être transmis sous la forme de mots de 32 bits. Une capacité supérieure peut être envisagée, notamment pour le cas où l'on souhaite transmettre des messages plus évolués, qu'il s'agisse des véhicules, des balises, ou d'autres objets fixes, non nécessairement reliés à la circulation.

Du fait que la modulation utilisée pour le fonctionnement de base de l'invention est une modulation d'argument, il serait théoriquement possible de transmettre ces informations sous forme d'une modulation d'amplitude. Toutefois, compte tenu des conditions électromagnétiques habituelles rencontrées par les véhicules, il est estimé préférable que ces informations soient transmises sous la forme d'une modulation d'argument qui soit lente ou même très lente, par rapport aux changements d'arguments qui sont détectés pour réaliser la mesure de distance.

Ainsi, le répondeur pourra opérer en modulant sa fréquence de transposition dans un plage de quelques kilohertz, qui est inférieure à la largeur de bande de l'analyse finale du récepteur de l'interrogateur (fixée plus haut à 7,5 kHz), et supérieure à la plage maximale du Doppler que l'on pourra rencontrer par exemple que l'on peut estimer à 1,5 kHz environ, pour les valeurs de fréquences données plus haut.

Dans ce cas, il suffit simplement aux unités de traitement des figures précédentes de détecter cette modulation lente, en plus de la réalisation de l'analyse distance.

Un avantage supplémentaire que l'on trouve à utiliser la modulation d'argument non seulement pour la mesure de distance, mais aussi pour transmettre ce type d'informations, réside en ce qu'il est alors possible d'associer directement les informations complémentaires reçues aux répondeurs situés à la distance qui vient d'être analysée.

Le premier mode de réalisation de l'invention possède les avantages suivants.

La sensibilité temporelle du dispositif est déterminée par un code pseudo-aléatoire dont on peut faire varier la fréquence en vue de modifier ladite sensibilité.

La technique fondée sur un code pseudo-aléatoire est peu sensible aux parasites.

Le code pseudo-aléatoire est lui-même sélectif, c'est-à-dire qu'il permet de lever l'ambiguïté de distance que peut présenter des répondeurs espacés d'une distance multiple de la portée du radar (ici 300 mètres).

Le second mode de réalisation de l'invention offre les avantages suivants.

La technique fondée sur une modulation bi-fréquence est plus simple et moins coûteuse que celle fondée sur un code pseudo-aléatoire nécessitant un corrélateur généralement cher.

La bande de travail du radar est plus étroite que celle du radar fonctionnant selon un code pseudo-aléatoire.

Bien entendu, l'invention n'est pas limitée aux modes de réalisation décrits, mais s'étend à toute variante incluse dans le cadre des revendications ci-après.

ANNEXE

$$\Delta \Phi = \frac{2 \Pi d}{\lambda} \sin \theta \quad (I)$$
$$\Delta \Phi = 2 \Pi N + \alpha \quad (II)$$

## Revendications

1. Procédé pour l'aide à la circulation de véhicules terrestres, caractérisé en ce qu'il comprend les étapes suivantes :

a) produire, au niveau de chaque véhicule terrestre d'une pluralité de véhicules terrestres, un premier signal radar respectif, et émettre à des instants périodiques choisis, une première onde radar respective correspondante s'étendant dans une première bande de fréquence prédéterminée, ladite première onde radar étant adaptée à une mesure de distance sur une portée de plusieurs centaines de mètres,

b) transposer, au niveau de chaque véhicule terrestre de ladite pluralité de véhicules terrestres, toute première onde radar reçue dans une première bande de fréquence prédéterminée, avec une transposition de fréquence prédéterminée, dans une seconde onde radar s'étendant dans une seconde bande de fréquence prédéterminée,

c) recevoir, au niveau de chaque véhicule de ladite pluralité, toute seconde onde radar incidente, comparer ladite seconde onde radar ainsi reçue et le premier signal radar et à partir de cette comparaison de mesurer la distance entre le véhicule local et le véhicule ayant transposé ledit signal,

pour permettre à la pluralité de véhicules terrestres effectuant lesdites mesures de distance de réduire le risque de collision entre des véhicules terrestres situés à proximité les uns des autres en utilisant le même premier signal radar dans la même zone.

2. Procédé selon la revendication 1, caractérisé en ce que l'étape b) est effectuée au niveau de chaque véhicule terrestre seulement pour des instants périodiques choisis.

3. Procédé selon la revendication 1 ou la revendication 2, caractérisé en ce que l'étape b) comprend en outre les étapes suivantes:
   - b1) au niveau d'autres corps différents des véhicules terrestres, transposer, toute première onde radar reçue dans une première bande de fréquence prédéterminée, avec une autre transposition de fréquence prédéterminée, dans une troisième onde radar s'étendant dans une troisième bande de fréquence prédéterminée, et
   en ce que l'étape c) comprend en outre les étapes suivantes:
   - c1) au niveau de chaque véhicule terrestre de ladite pluralité de véhicules terrestres, recevoir toute troisième onde radar incidente, et comparer ladite troisième onde radar ainsi reçue et le premier signal radar afin de mesurer la distance entre le véhicule local et le corps ayant transposé ledit signal.

4. Procédé selon la revendication 3, caractérisé en ce que les étapes b1) et c1) sont sélectivement effectuées par des corps appartenant à différentes catégories, avec différentes valeurs respectives de transposition de fréquence.

5. Procédé selon la revendication 1, caractérisé en ce que les instants périodiques choisis de l'étape a) sont sensiblement plus longs que l'équivalent en temps de la précision en distance recherchée.

6. Procédé selon l'une des revendications 1 à 5,-caractérisé en ce que l'étape b) comprend en outre le codage de la seconde onde radar tandis que l'étape c) comprend en outre le décodage de ladite seconde onde radar incidente.

7. Procédé selon la revendication 6, caractérisé en ce que ledit codage s'effectue par modulation lente d'argument.

8. Procédé selon la revendication 1, caractérisé en ce que la bande de travail est de l'ordre du gigahertz, avec une largeur de bande d'au moins une dizaine de mégahertz pour chaque première onde radar.

9. Procédé selon l'une des revendications 1 à 8, caractérisé en ce que l'étape b) comprend en outre la non-réémission pendant l'émission du premier signal radar au niveau du même véhicule.

10. Procédé selon l'une des revendications 1 à 9, caractérisé en ce que l'étape a) est interrompue en cas d'interférences non solubles lors de l'étape c).

11. Procédé selon l'une des revendications 1 à 10, caractérisé en ce que l'étape a) comprend la modulation du premier signal radar par inversion de phase selon un code pseudo-aléatoire sélectivement associé au véhicule, tandis que l'étape c) comprend en outre une corrélation de la seconde onde radar avec ledit code pseudo-aléatoire pour obtenir la mesure de distance entre le véhicule local et le véhicule ayant transposé le signal.

12. Procédé selon la revendication 11, caractérisé en ce que l'étape a) comprend :
   - a11) la génération (SHF) dudit premier signal radar ($F\phi$),
   - a12) la génération (GPA) d'un code pseudo-aléatoire (cpa) spécifique du radar,
   - a13) la modulation (ME) dudit premier signal radar par inversion de phase selon ledit code pseudo-aléatoire,
   - a14) l'émission (ARE) dudit premier signal radar ainsi modulé,
   et en ce que l'étape c) comprend :
   - c11) la réception (ARR) de toute seconde onde radar incidente,
   - c12) la première démodulation (MR,AFR) de ces retours par le premier signal radar ($F\phi$), qui fournit des retours en fréquence intermédiaire (FI),
   - c13) la production (OMI) d'un signal local de démodulation distance ($Ft_1,Ft_2$) possédant au moins l'une des fréquences de transposition des répondeurs, lui-même modulé par ledit code pseudo-aléatoire, de façon décalable dans le temps,
   - c14) la seconde démodulation (DM1,AD1, DM2,AD2) des retours à fréquence intermédiaire par ledit signal local de démodulation en distance, et
   - c15) le décalage (UT) dudit code jusqu'à obtenir une relation de phase prédéterminée après la seconde démodulation, le décalage étant alors représentatif de la distance du répondeur concerné.

13. Procédé selon l'une des revendications 1 à 10, caractérisé en ce que l'étape a) comprend la production de deux ondes porteuses voisines (Fφ ± f) sélectivement associées et l'émission simultanée de ces deux ondes porteuses et en ce que l'étape c) comprend la mesure de l'écart de phase entre les deux ondes radar incidentes pour obtenir la mesure de distance entre le véhicule local et le véhicule ayant transposé le signal.

14. Procédé selon la revendication 13, caractérisé en ce que l'étape a) comprend les étapes suivantes :
- a111) la génération (SHF) d'une onde de base (Fφ),
- a112) la génération (GFM) d'une fréquence auxiliaire (± f),
- a113) la modulation (ME) de l'onde de base par la fréquence (± f), auxiliaire,
- a114) l'émission (ARE) de deux ondes porteuses issues de la modulation de l'onde de base et en ce que l'étape c) comprend les étapes suivantes :
- c111) la réception (ARR) de toute seconde onde radar incidente,
- c112) la première démodulation (MR, AFR) de ces retours par l'onde de base, qui fournit des retours en fréquence intermédiaire (FI),
- c113) la production (MR1,MR2) de deux signaux locaux de démodulation distance possédant chacun au moins l'une des fréquences de transposition des répondeurs, eux-mêmes modulés par la fréquence auxiliaire ($Ft_1 \pm f$ ; $Ft2 \pm f$),
- c114) la seconde démodulation (DM11, DM12 ; DM21,DM22) séparée des retours à frécuence intermédiaire par lesdits signaux locaux de démodulation de distance,
- c115) le filtrage (AD11,AD12 ; AD21,AD22) des signaux obtenus après la seconde démodulation, lesdits signaux étant alors représentatifs de la distance du répondeur concerné.

15. Dispositif pour l'aide à la circulation de véhicules terrestres destiné à être monté sur au moins un véhicule terrestre, caractérisé en ce qu'il comprend en combinaison:
- des moyens producteurs radar pour produire un premier signal radar,
- des moyens émetteurs pour émettre à des instants périodiques choisis, une première onde radar correspondante au premier signal radar et s'étendant dans une première bande de fréquence prédéterminée, ladite première onde radar étant adaptée à une mesure de distance sur une portée de plusieurs centaines de mètres,
- un répondeur pour transposer toute première onde radar reçue dans une première bande de fréquence prédéterminée, avec une transposition de fréquence prédéterminée, dans une seconde onde radar s'étendant dans une seconde bande de fréquence prédéterminée,
- des moyens récepteurs propres à recevoir toute seconde onde radar incidente, et
- des moyens comparateurs propres à comparer ladite seconde onde radar ainsi reçue et le premier signal radar afin de mesurer la distance entre le véhicule local et le véhicule ayant transposé ledit signal,

pour permettre à une pluralité de véhicules terrestres ayant un tel dispositif d'effectuer lesdites mesures de distance afin de réduire le risque de collision entre des véhicules terrestres situés à proximité les uns des autres en utilisant le même premier signal radar dans la même zone.

16. Dispositif selon la revendication 15, caractérisé en ce que le répondeur comprend des moyens réémetteurs pour réémettre seulement lors des instants périodiques choisis par au moins un véhicule terrestre.

17. Dispositif selon la revendication 15 ou la revendication 16, caractérisé en ce qu'il comprend au niveau d'autres corps différents des véhicules terrestres, d'autres répondeurs individuels (T) différents de ceux équipant lesdits véhicules terrestres, lesdits répondeurs étant propres à transposer toute première onde radar reçue dans une première bande de fréquence prédéterminée, avec une autre transposition de fréquence prédéterminée, dans une troisième onde radar s'étendant dans une troisième bande de fréquence prédéterminée, et en ce que le radar reçoit toute troisième onde radar incidente, et compare ladite troisième onde radar ainsi reçue et le premier signal radar afin de mesurer la distance entre le véhicule local et le corps ayant transposé ledit signal.

18. Dispositif selon la revendication 17, caractérisé en ce que chaque autre répondeur individuel (T) est associé à une fréquence nominale de fréquence spécifique appropriée à la catégorie du corps qu'il équipe.

19. Dispositif selon l'une des revendications 15 à 18, caractérisé en ce que le premier signal radar produit par le radar est propre à une mesure de distance d'après leur argument sur des temps d'émission longs devant l'équivalent en temps de la précision en distance recherchée.

20. Dispositif selon l'une des revendications 15 à 19, caractérisé en ce que ledit répondeur comprend des moyens de codage propres à coder les secondes ondes radar et en ce que le radar comprend des moyens de décodage propres à décoder les secondes ondes radar incidentes.

21. Dispositif selon la revendication 20 prise en combinaison avec la revendication 19, caractérisé en ce que ledit codage s'effectue par modulation lente d'argument.

22. Dispositif selon l'une des revendications 20 et 21, caractérisé en ce que ledit codage intéresse l'une au moins des informations comprenant la nature, la vitesse, le cap, l'accélération et le freinage, du porteur du répondeur.

23. Dispositif selon l'une des revendications 15 à 22, caractérisé en ce que la bande de travail est de l'ordre du gigahertz, avec une largeur de bande d'au moins-une dizaine de mégahertz environ.

24. Dispositif selon l'une des revendications 15 à 23, caractérisé en ce que les répondeurs (T) sont omnidirectionnels.

25. Dispositif selon l'une des revendications 15 à 24, caractérisé en ce que le répondeur (T) d'un véhicule ne réémet pas pendant l'émission du radar du même véhicule.

26. Dispositif selon l'une des revendications 15 à 25, caractérisé en ce que le radar est omnidirectionnel en réception.

27. Dispositif selon l'une des revendications 15 à 26, caractérisé en ce que le radar est équipé d'antennes multiples (ARE, ARR), implantées sur le véhicule associé pour permettre une sélectivité en direction.

28. Dispositif selon l'une des revendications 15 à 27, caractérisé en ce que l'émission d'un radar est interrompue en cas d'interférences à la réception de la seconde onde radar incidente.

29. Dispositif selon l'une des revendications 15 à 28, caractérisé en ce que chaque répondeur (T) transmet le premier signal radar transposé en fréquence selon une modulation à bande latérale unique.

30. Dispositif selon l'une des revendications 15 à 29, caractérisé en ce que les moyens producteurs radar sont propres à produire une onde porteuse modulée par inversion de phase selon un code pseudo-aléatoire sélectivement associé au véhicule, les moyens émetteurs propres à émettre ladite onde porteuse modulée à des instants périodiques choisis, et les moyens récepteurs sont propres à recevoir toute seconde onde radar incidente avec ledit code pseudo-aléatoire pour obtenir la mesure de distance entre le véhicule local et le véhicule ayant transposé le signal.

31. Dispositif selon la revendication 30, caractérisé en ce que les moyens producteurs radar comprennent:
    - des moyens générateurs (SHF) de ladite onde porteuse (F$\phi$),
    - des moyens générateurs (GPA) d'un code pseudo-aléatoire (cpa) spécifique du radar,
    - un modulateur (ME) de l'onde porteuse par inversion de phase selon ledit code pseudo-aléatoire,
    - en ce que les moyens d'émission (ARE) sont agencés pour émettre l'onde porteuse ainsi modulée,
    - et les moyens de réception (ARR) des signaux de retour radar comprennent:
    - un premier démodulateur (MR) de ces retours par ladite onde porteuse, qui fournit des retours en fréquence intermédiaire (FI),
    - un générateur (OMI) d'un signal local de démodulation distance possédant au moins l'une des fréquences de transposition des répondeurs (Ft$_1$,Ft$_2$), lui-même modulé par ledit code pseudo-aléatoire, de façon décalable dans le temps,
    - un second démodulateur (DM1,AD1, DM2,AD2) des retours à fréquence intermédiaire par ledit signal local de démodulation en distance, et
    - des moyens de décalage (UT) dudit code jusqu'à obtenir une relation de phase prédéterminée après la seconde démodulation, le décalage étant alors représentatif de la distance du répondeur concerné.

32. Dispositif selon l'une des revendications 15 à 31, caractérisé en ce que les moyens producteurs radar sont propres à produire deux ondes porteuses voisines (F$\phi \pm$ f), sélectivement associées, et les moyens émetteurs sont propres à émettre simultanément lesdites deux ondes porteuses, et en ce que les moyens récepteurs sont propres à recevoir toute seconde onde radar incidente, et comportent des moyens pour mesurer l'écart de phase entre les deux secondes ondes radar incidentes pour obtenir la mesure de distance entre le véhicule radar et le véhicule ayant transposé le signal.

33. Dispositif selon la revendication 32, caractérisé en ce que les moyens producteurs radar comprennent :

- un générateur (SHF) de ladite paire d'ondes porteuses adjacentes (Fφ),
- un générateur (GFM) d'une fréquence auxiliaire (± f),
- un modulateur (ME) de ladite paire d'ondes porteuses par la fréquence auxiliaire (± f),
- en ce que les moyens d'émission (ARE) sont propres à émettre les deux ondes porteuses ainsi modulées,

et les moyens récepteurs des signaux de retour comprennent :

- un premier démodulateur (MR, AFR) de ces retours par la paire d'ondes porteuses, qui fournit des retours en fréquence intermédiaire (FI),
- un générateur (MR1,MR2) de deux signaux locaux de démodulation distance possédant chacun au moins l'une des fréquences de transposition des répondeurs, eux-mêmes modulés par la fréquence auxiliaire (Ft$_1$ ± F, Ft$_2$ ± f),
- un second démodulateur (DM11,DM12, DM21,DM22) séparé des retours à fréquence intermédiaire par lesdits signaux locaux de démodulation de distance,
- des moyens de filtrage (AD11,AD12, AD21,AD22) des signaux obtenus après la seconde démodulation, lesdits signaux étant alors représentatifs de la distance du répondeur concerné.

**Patentansprüche**

1. Verfahren zur Hilfe des Landfahrzeugverkehrs, **dadurch gekennzeichnet,** daß es die folgenden Schritte umfaßt:

   a) Erzeugen, bei jedem Landfahrzeug aus einer Vielzahl von Landfahrzeugen, jeweils eines ersten Radarsignals, und Senden, zu gewählten periodischen Zeitpunkten, von jeweils einer entsprechenden ersten Radarwelle, die sich in einem ersten festgelegte Frequenzband ausbreitet, wobei besagte erste Radarwelle zur Distanzmessung über eine Reichweite von mehreren hundert Metern geeignet ist,

   b) Umsetzen, bei jedem Landfahrzeug der genannten Vielzahl von Landfahrzeugen, jeder ersten in einem ersten festgelegten Frequenzband empfangenen Radarwelle, mit einer festgelegten Frequenzumsetzung, in eine zweite Radarwelle, die sich in einem zweiten festgelegten Frequenzband ausbreitet,

   c) Empfangen, in jedem Fahrzeug der genannten Vielzahl, jeder einfallenden zweiten Radarwelle, Vergleichen der so empfangenen zweiten Radarwelle und des ersten Radarsignals und, aufgrund dieses Vergleichs, Messen bzw. Bestimmen der Distanz zwischen dem lokalen Fahrzeug und dem Fahrzeug, das besagtes Signal umgesetzt hat,

um der Vielzahl der besagte Messungen durchführenden Landfahrzeuge zu ermöglichen, die Kollisionsrisiken zu verringern zwischen Landfahrzeugen, die sich nahe beieinander befinden und dabei dasselbe erste Radarsignal verwenden in derselben Zone.

2. Verfahren nach Anspruch 1, dadurch gekennzeichnet, daß der Schritt b) bei jedem Landfahrzeug nur zu gewählten, periodischen Zeitpunkten durchgeführt wird.

3. Verfahren nach Anspruch 1 oder 2, dadurch gekennzeichnet, daß der Schritt b) außerdem folgende Schritte umfaßt:

   - b1) bei anderen, sich von Landfahrzeugen unterscheidenden Körpern, Umsetzen jeder in einem ersten festgelegten Frequenzband empfangenen ersten Radarwelle, mit einer anderen festgelegten Frequenzumsetzung, in eine dritte Radarwelle, die sich in einem dritten festgelegten Frequenzband ausbreitet, und

   dadurch, daß der Schritt c) außerdem folgende Schritte umfaßt:

   - c1) bei jedem Landfahrzeug der besagten Vielzahl Landfahrzeuge, Empfangen jeder einfallenden dritten Radarwelle und Vergleichen der empfangenen Radarwelle und des ersten Radarsignals, um die Distanz zu messen zwischen dem lokalen Fahrzeug und dem Körper, der besagtes Signal umgesetzt hat.

4. Verfahren nach Anspruch 3, dadurch gekennzeichnet, daß die Schritte b1) und c1) selektiv durchgeführt werden durch Körper, die zu verschiedenen Kategorien gehören, mit jeweils unterschiedlichen Frequenzumsetzungswerten.

5. Verfahren nach Anspruch 1, dadurch gekennzeichnet, daß die gewählten, periodischen Zeitpunkte des Schritts a) wesentlich länger sind als das Zeitäquivalent der gesuchten Abstandsgenauigkeit.

6. Verfahren nach einem der Ansprüche 1 bis 5, dadurch gekennzeichnet, daß der Schritt b) außerdem die Codierung der zweiten Radarwelle umfaßt, während der Schritt c) außerdem die Decodierung der besagten einfallenden zweiten Radarwelle umfaßt.

7. Verfahren nach Anspruch 6, dadurch gekennzeichnet, daß die genannte Codierung durch langsame Phasenmodulation erfolgt.

8. Verfahren nach Anspruch 1, dadurch gekennzeichnet, daß das Arbeitsband in Größenordnung von 1 Ghz ist, mit einer Bandbreite von wenigstens ungefähr 10 MHz für jede erste Radarwelle.

9. Verfahren nach einem der Ansprüche 1 bis 8, dadurch gekennzeichnet, daß der Schritt b) außerdem die Nicht-Wiederaussendung während der Aussendung des ersten Radarsignals durch dasselbe Fahrzeug umfaßt.

10. Verfahren nach einem der Ansprüche 1 bis 9, dadurch gekennzeichnet, daß der Schritt a) unterbrochen wird im Falle von nichtauflösbaren Interferenzen während des Schritts c).

11. Verfahren nach einem der Ansprüche 1 bis 10, dadurch gekennzeichnet, daß der Schritt a) die Modulation des ersten Radarsignals durch Phasenumkehrung gemäß einem dem Fahrzeug selektiv zugeordneten Pseudozufallscode umfaßt, während der Schritt c) außerdem eine Korrelation der zweiten Radarwelle mit besagtem Pseudozufallscode umfaßt, um die Distanzmessung bzw. das Distanzmaß zwischen dem lokalen Fahrzeug und dem Fahrzeug zu erhalten, das das Signal umgesetzt hat.

12. Verfahren nach Anspruch 11, dadurch gekennzeichnet, daß der Schritt a) umfaßt:
   - a11) die Erzeugung (SHF) des genannten ersten Radarsignals ($F\phi$),
   - a12) die Erzeugung (GPA) eines für das Radargerät spezifischen Pseudozufallcodes (cpa),
   - a13) die Modulation (ME) des genannten Radarsignals durch Phasenumkehrung gemäß dem genannten Zufallscode,
   - a14) die Emission (ARE) des genannten, derart modulierten ersten Radarsignals, und dadurch, daß der Schritt c) umfaßt:
   - c11) den Empfang (ARR) jeder einfallenden zweiten Radarwelle,
   - c12) die erste Demodulation (MR,AFR) dieses Rücksendungen bzw. dieses Echos durch das erste Radarsignal ($F\phi$), die Zwischenfrequenz-Echos (FI) liefert,
   - c13) die Erzeugung (OMI) eines lokalen Distanz-Demodulationssignals ($Ft_1,Ft_2$), das wenigstens eine der Umsetzungsfrequenzen der Antwortsender aufweist, seinerseits selbst moduliert durch den genannten Pseudozufallscode, zeitlich verschiebbar,
   - c14) die zweite Demodulation (DM1,AD1, DM2,AD2) der Zwischenfrequenz-Echos durch das genannte lokale Distanz-Demodulationssignal, und
   - c15) die Verschiebung (UT) des genannten Codes bis man ein festgelegtes Phasenverhältnis erhält nach der zweiten Demodulation, wobei die Verschiebung dann repräsentativ ist für den Abstand des betreffenden Antwortsenders.

13. Verfahren nach einem der Ansprüche 1 bis 10, dadurch gekennzeichnet, daß der Schritt a) die Erzeugung von zwei selektiv zugeordneten, benachbarten Trägerwellen ($F\phi \pm f$) und die simultane Emission dieser beiden Trägerwellen umfaßt, und dadurch, daß der Schritt c) die Messung des Phasenhubs zwischen den beiden einfallenden Radarwellen umfaßt, um das Distanzmaß zwischen dem lokalen Fahrzeug und dem Fahrzeug zu erhalten, das das Signal umgesetzt hat.

14. Verfahren nach Anspruch 13, dadurch gekennzeichnet, daß der Schritt a) die folgenden Schritte umfaßt:
   - a111) die Erzeugung (SHF) einer Grundwelle ($F\phi$),
   - a112) die Erzeugung (GFM) einer Hilfsfrequenz ($\pm f$),
   - a113) die Modulation der Grundwelle durch die Hilfsfrequenz ($\pm f$),
   - a114) die Emission (ARE) von zwei Trägerwellen, hervorgegangen aus der Modulation der Grundwelle, dadurch gekennzeichnet, daß der Schritt c) folgende Schritte umfaßt:
   - c111) den Empfang (ARR) von jeder einfallenden zweiten Radarwelle,
   - c112) die erste Demodulation (MR,AFR) dieser Echos durch die Grundwelle, die Zwischenfrequenz-Echos (FI) liefert,
   - c113) die Erzeugung (MR1,MR2) von zwei lokalen Distanzdemodulationssignalen, von denen jedes wenigstens eine der Umsetzungsfrequenzen der Antwortsender aufweist, ihrerseits selbst moduliert durch die Hilfsfrequenz ($Ft_1 \pm f; Ft_2 \pm f$),
   - c114) die zweite Demodulation (DM11, DM12; DM21,DM22) getrennt von den Zwischenfrequenz-Echos durch die genannten lokalen Distanzdemodulationssignale,
   - c115) die Filtrierung (AD11,AD12; AD21, AD22) der nach der zweiten Demodulation erhaltenen Signale, wobei besagte Signale dann repräsentativ sind für den Abstand des betreffenden Antwortsenders.

15. Vorrichtung zur Hilfe des Landfahrzeugverkehrs, bestimmt zur Installation auf wenigstens einem Landfahrzeug,

**dadurch gekennzeichnet**, daß es zusammengestellt umfaßt:

- Radarerzeugungseinrichtungen zum Erzeugen eines ersten Radarsignals,
- Sendeeinrichtungen zum Senden, zu gewählten periodischen Zeitpunkten, einer ersten Radarwelle, die dem ersten Radarsignal entspricht und sich ausbreitet in einem ersten festgelegten Frequenzband, wobei die erste Radarwelle angepaßt ist an eine Abstandsmessung über eine Reichweite von mehreren hundert Metern,
- einen Antwortsender zum Umsetzen jeder in einem ersten festgelegten Frequenzband empfangenen Radarwelle, mit einer festgelegten Frequenzumsetzung, in eine zweite Radarwelle, die sich in einem zweiten festgelegten Frequenzband ausbreitet.
- Empfangseinrichtungen zum Empfangen jeder einfallenden Radarwelle, und
- Vergleicher-Einrichtungen zum Vergleichen der einmal empfangenen besagten zweiten Radarwelle und des ersten Radarsignals, um die Distanz zu messen zwischen dem lokalen Fahrzeug und dem Fahrzeug, das besagtes Signal umgesetzt hat,

um einer Vielzahl von Landfahrzeugen, die eine solche Vorrichtung haben, die Durchführung der genannten Distanzmessungen zu ermöglichen, um die Kollisionsrisiken zu verringern zwischen Landfahrzeugen, die sich nahe beieinander befinden und dabei dasselbe erste Radarsignal verwenden in derselben Zone.

16. Vorrichtung nach Anspruch 15, dadurch gekennzeichnet, daß der Antwortsender Einrichtungen zum Wiederaussenden umfaßt, um nur während ausgewählten periodischen Zeitpunkten wiederauszusenden, ausgewählt durch wenigstens ein Landfahrzeug.

17. Vorrichtung nach Anspruch 15 oder Anspruch 16, dadurch gekennzeichnet, daß sie bei anderen, zu den Landfahrzeugen unterschiedlichen Körpern weitere individuelle Antwortsender (T) umfaßt, die sich von denen unterscheiden von denen, mit denen die Landfahrzeuge ausgestattet sind, wobei besagte Antwortsender jede in einem ersten festgelegten Frequenzband empfangene erste Radarwelle mit einer anderen bzw. weiteren Frequenzumsetzung umsetzen können in eine dritte, sich in einem dritten festgelegten Frequenenzband ausbreitende Radarwelle, und dadurch, daß das Radar jede einfallende dritte Radarwelle empfängt und die so empfangene dritte Radarwelle und das erste Radarsignal vergleicht, um die Distanz zu messen zwischen dem lokalen Fahrzeug und dem Körper, der besagtes Signal umgesetzt hat.

18. Vorrichtung nach Anspruch 17, dadurch gekennzeichnet, daß jeder einzelne Antwortsender (T) eine Nennfrequenz von spezifischer Frequenz aufweist, die der Körperkategorie zugeordnet ist, die er ausstattet.

19. Vorrichtung nach einem der Ansprüche 15 bis 18, dadurch gekennzeichnet, daß das erste durch das Radar erzeugte Radarsignal sich eignet für eine Distanzmessung gemäß ihrer Phase über lange Aussendungszeiten gegenüber dem Zeitäquivalent der gesuchten Distanzgenauigkeit.

20. Vorrichtung nach einem der Ansprüche 15 bis 19, dadurch gekennzeichnet, daß der genannte Antwortsender Codierungseinrichtungen zum Codieren der zweiten Radarwellen umfaßt, und daß das Radar Decodierungseinrichtungen zum Decodieren der einfallenden zweiten Radarwellen umfaßt.

21. Vorrichtung nach Anspruch 20 in Verbindung mit dem Anspruch 19, dadurch gekennzeichnet, daß besagte Codierung durch langsame Phasenmodulation erfolgt.

22. Vorrichtung nach einem der Ansprüche 20 und 21, dadurch gekennzeichnet, daß besagte Codierung wenigstens eine der Informationen betrifft, die die Art, die Geschwindigkeit, den Kurs, die Beschleunigung und die Bremsung des Trägers des Antwortsenders umfassen.

23. Vorrichtung nach einem der Ansprüche 15 bis 22, dadurch gekennzeichnet, daß das Arbeitsband in der Großenordnung von 1 GHz ist, mit einer Bandbreite von wenigstens ungefähr 10 MHz.

24. Vorrichtung nach einem der Ansprüche 15 bis 23, dadurch gekennzeichnet, daß die Antwortsender (T) omnidirektionell sind.

25. Vorrichtung nach einem der Ansprüche 15 bis 24, dadurch gekennzeichnet, daß der Antwortsender (T) eines Fahrzeugs nicht wiederaussendet während des Aussendens des Radars desselben Fahrzeugs.

26. Vorrichtung nach einem der Ansprüche 15 bis 25, dadurch gekennzeichnet, daß das Radar omnidirektionell empfängt.

27. Vorrichtung nach einem der Ansprüche 15 bis 26, dadurch gekennzeichnet, daß das Radar mit verschiedenen Antennen (ARE, ARR) ausgestattet ist, die auf dem dazugehörenden Fahrzeug installiert sind, um eine Richtungswahl zu ermöglichen.

28. Vorrichtung nach einem der Ansprüche 15 bis 27, dadurch gekennzeichnet, daß das Aussenden eines Radars unterbrochen wird im Falle von Interferenzen beim Empfangen der einfallenden zweiten Radarwelle.

29. Vorrichtung nach einem der Ansprüche 15 bis 28, dadurch gekennzeichnet, daß jeder Antwortsender (T) das erste frequenzumgesetzte Radarsignal entsprechend einer Einseitenband-Modulation überträgt.

30. Vorrichtung nach einem der Ansprüche 15 bis 29, dadurch gekennzeichnet, daß die Radarerzeugungseinrichtungen eine Trägerwelle erzeugen können, moduliert durch Phasenumkehrung entsprechend einem Pseudozufallscode, selektiv dem Fahrzeug zugeordnet, daß die Sendeeinrichtungen besagte modulierte Trägerwelle aussenden können zu gewählten periodischen Zeitpunkten und, daß die Empfangseinrichtungen jede einfallende zweite Radarwelle mit dem genannten Pseudozufallscode empfangen können, um die Distanzmessung bzw. das Distanzmaß zwischen dem lokalen Fahrzeug und dem Fahrzeug zu erhalten, das das Signal umgesetzt hat.

31. Vorrichtung nach Anspruch 30, dadurch gekennzeichnet, daß die Radarerzeugungseinrichtungen umfassen:
   - Erzeugungseinrichtungen (SHF) der genannten Trägerwelle (Fϕ),
   - Erzeugungseinrichtungen (GPA) eines spezifischen Pseudozufallscodes (cpa) des Radars,
   - einen Modulator (ME) der Trägerwelle durch Phasenumkehrung entsprechend besagtem Pseudozufallscode,
   - dadurch, daß die Sendeeinrichtungen (ARE) eingerichtet sind, um die so modulierte Trägerwelle auszusenden,
   - und die Empfangseinrichtungen (ARR) der Radar-Echosignale umfassen:
   - einen ersten Demodulator (MR) eines lokalen Distanzdemodulationssignals, wenigstens eine der Umsetzungsfrequenzen der Antwortsender ($Ft_1$, $Ft_2$) aufweisend, selbst moduliert durch besagten Pseudozufallscode, auf zeitlich verschiebbare Weise,
   - einen zweiten Demodulator (DM1,AD1, DM2,AD2) der Zwischenfrequenzechos durch besagtes lokales Distanzdemodulationssignal, und
   - Verschiebungseinrichtungen (UT) des genannten Codes bis zum Erhalten eines festgelegten Phasenverhältnisses nach der zweiten Demodulation, wobei die Verschiebung dann repräsentativ ist für den Abstand des betreffenden Antwortsenders.

32. Vorrichtung nach einem der Ansprüche 15 bis 31, dadurch gekennzeichnet, daß die Radarerzeugungseinrichtungen zwei benachbarte Trägerwellen (Fϕ ± f) erzeugen können, selektiv zugeordnet, und die Sendeeinrichtungen simultan diese beiden Trägerwellen aussenden können, und dadurch, daß die Empfangseinrichtungen jede einfallende zweite Radarwelle empfangen können und Einrichtungen zum Messen des Phasenhubs zwischen den beiden einfallenden zweiten Radarwellen, um das Distanzmaß zwischen dem Radarfahrzeug und dem Fahrzeug zu erhalten, das das Signal umgesetzt hat.

33. Vorrichtung nach Anspruch 32, dadurch gekennzeichnet, daß die Radarerzeugungseinrichtungen umfassen:
   - einen Generator (SHF) des besagten Paares benachbarter Trägerwellen (Fϕ),
   - einen Generator (GFM) einer Hilfsfrequenz (± f),
   - einen Modulator (ME) des besagten Trägerwellenpaares mit der Hilfsfrequenz (± f), dadurch, daß die Sendeeinrichtungen zwei so modulierte Trägerwellen aussenden können,
   und die Empfangseinrichtungen der Echosignale umfassen:
   - einen ersten Demodulator (MR,AFR) dieser Echos durch das Trägerwellenpaar, der Zwischenfrequenzechos (FI) liefert,
   - einen Generator (MR1,MR2) von zwei lokalen Disatanzdemodulationssignalen, von denen jedes wenigstens eine der Umsetzungsfrequenzen der Antwortsender aufweist, ihrerseits selbst moduliert mit der Hilfsfrequenz ($Ft_1$ ± f, Ft2 ± f),
   - einen zweiten Demodulator (DM11,DM12, DM21,DM22), getrennt von den Zwischenfrequenzechos durch besagte lokale Distanzdemodulationssignale,
   - Filtriereinrichtungen (AD11,AD12,AD21, AD22) der nach der zweiten Demodulation erhaltenen Signale, wobei besagte Signale dann repräsentativ sind für die Distanz des betreffenden Antwortsenders.

**Claims**

1. A method for assisting land vehicle traffic, characterized in that it includes the following steps :

a) producing at the level of each land vehicle of a plurality of land vehicles a first respective radar signal, and transmitting at chosen periodic moments a first respective corresponding radar wave extending in a first predetermined frequency band, the said first radar wave being adapted to measuring a distance over a range of several hundreds of metres.

b) transposing at the level of each land vehicle of the said plurality of land vehicles, every first radar wave received in a predetermined first frequency band, with a transposition at a predetermined frequency into a second radar wave extending in a second predetermined frequency band,

c) receiving at the level of each vehicle of the said plurality, every incident second radar wave, comparing the said second radar wave thus received and the first radar signal, and measuring on the basis of this comparison the distance between the local vehicle and the vehicle having transposed the said signal,

to allow the plurality of land vehicles effecting the said distance measurements to reduce the risk of collision between land vehicles situated in each other's proximity by using the same first radar signal in the same zone.

2. A method according to claim 1, characterized in that the step b) is effected at the level of each land vehicle solely at chosen periodic moments.

3. A method according to claim 1 or claim 2, characterized in that the step b) includes, moreover, the following steps:
   - b1) transposing at the level of other bodies that are different from the land vehicles, every first radar wave received in a predetermined first frequency band, with another transposition at a predetermined frequency into a third radar wave extending in a predetermined third frequency band, and
   in that the step c) includes, moreover, the following steps:
   - c1) receiving at the level of each land vehicle of the said plurality of land vehicles, every incident third radar wave and comparing the said third radar wave thus received and the first radar signal, so as to measure the distance between the local vehicle and the body having transposed the said signal.

4. A method according to claim 3, characterized in that the steps bi) and c1) are selectively carried out by bodies belonging to different categories with different respective frequency transposition values.

5. A method according to claim 1, characterized in that the chosen periodic moments of step a) are substantially longer than the time equivalent of the accuracy sought for the distance.

6. A method according to one of claims 1 to 5, characterized in that the step b) includes, moreover, the coding of the second radar wave, while the step c) includes, moreover, the decoding of the said second incident radar wave.

7. A method according to claim 6, characterized in that the said coding is effected by a slow argument modulation.

8. A method according to claim 1, characterized in that the operating band is of the order of a gigahertz, with a bandwidth of at least about ten megahertz for each first radar wave.

9. A method according to one of claims 1 to 8, characterized in that the step b) includes, moreover, the non-retransmission during the transmission of the first radar signal at the level of the same vehicle.

10. A method according to one of claims 1 to 9, characterized in that the step a) is interrupted in the case of irresolvable interference during the step c).

11. A method according to one of claims 1 to 10, characterized in that the step a) includes the modulation of the first radar signal by phase inversion according to a pseudorandom code that is selectively associated with the vehicle, whilst the step c) includes, moreover, a correlation of the second radar wave with the said pseudorandom code, so as to obtain the measurement of the distance between the local vehicle and the vehicle having transposed the signal.

12. A method according to claim 11, characterized in that the step a) includes :
   - a11) the generation (SHF) of the said first radar signal (F$\phi$),
   - a12) the generation (GPA) of a pseudorandom code (cpa) that is specific to the radar,
   - a13) the modulation (ME) of the said first radar signal by phase inversion according to the said pseudorandom code,
   - a14) the transmission (ARE) of the first radar signal thus modulated,
   and in that the step c) includes :
   - c11) the reception (ARR) of every incident second radar wave,
   - c12) the first demodulation (MR, AFR) of these returns by the first radar signal (F$\phi$),

which provides returns in an intermediate frequency (FI),

- c13) the production (OMI) of a local distance demodulation signal ($Ft_1$, $Ft_2$) having at least one of the transposition frequencies of the responders, which is itself modulated by the said pseudorandom code that can be subjected to a time lag,
- c14) the second demodulation (DM1, AD1, DM2, AD2) of the returns at an intermediate frequency by the said local distance demodulation signal, and
- c15) displacing (UT) the said code until a predetermined phase relation is obtained after the second demodulation, the displacement then representing the distance of the responder concerned.

13. A method according to one of claims 1 to 10, characterized in that the step a) includes the production of two adjacent selectively associated carrier waves ($F\phi \pm f$) and the simultaneous transmission of these two carrier waves, and in that the step c) includes the measurement of the phase deviation between the two incident radar waves, so as to obtain the measurement of the distance between the local vehicle and the vehicle which has transposed the signal.

14. A method according to claim 13, characterized in that the step a) includes the following steps :
- a111) the generation (SHF) of a base wave ($F\phi$),
- a112) the generation (GFM) of an auxiliary frequency ($\pm f$),
- a113) the modulation (ME) of the base wave ($F\phi$) by the auxiliary frequency ($\pm f$),
- a114) the transmission (ARE) of two carrier waves obtained by the modulation of the base wave ($F\phi$), and in that the step c) includes the following steps :
- c111) the reception (ARR) of every incident second radar wave,
- c112) the first demodulation (MR, AFR) of these returns by the base wave, which provides returns in an intermediate frequency (FI),
- c113) the production (MR1, MR2) of two local distance demodulation signals, each having at least one of the transposition frequencies of the responders, which are themselves modulated by the auxiliary frequency ($Ft_1 \pm f$; $Ft_2 \pm f$),
- c114) the second separate demodulation (DM11, DM12; DM21, DM22) of the returns at the intermediate frequency by the said local distance demodulation signals,
- c115) the filtering (AD11, AD12; AD21, AD22) of the signals obtained after the second demodulation, the said signals then representing the distance of the responder concerned.

15. A device for assisting the traffic of land vehicles intended to be installed in at least one land vehicle, characterized in that it comprises in combination :
- radar producing means for producing a first radar signal,
- transmission means for transmitting at chosen periodic moments a first radar wave corresponding to the first radar signal and extending in a first predetermined frequency band, the said first radar wave being adapted to measuring a distance over a range of several hundreds of metres,
- a responder for transposing every first radar wave received in a predetermined first frequency band, with a transposition at a predetermined frequency into a second radar wave extending in a second predetermined frequency band,
- receiving means capable of receiving every incident second radar wave, and
- comparison means capable of comparing the said second radar wave thus received and the first radar signal, so as to measure the distance between the local vehicle and the vehicle having transposed the said signal,

to allow a plurality of land vehicles having such a device to effect the said distance measurements to reduce the risk of collision between land vehicles situated in each other's proximity by using the same first radar signal in the same zone.

16. A device according to claim 15, characterized in that the responder comprises retransmission means for retransmitting only at periodic moments chosen by at least one land vehicle.

17. A device according to claim 15 or claim 16, characterized in that it comprises at the level of other bodies different from the land vehicles, other individual responders (T) that are different from those equipping the said land vehicles, the said responders being capable of transposing every first radar wave received in a predetermined first frequency band, with another transposition at a predetermined frequency into a third radar wave extending in a predetermined third frequency band, and in that the radar receives every incident third radar wave and compares the said third radar wave thus received and the first radar signal, so as to measure the distance between the local vehicle and the body having transposed the said signal.

18. A device according to claim 17, characterized in that each other individual responder (T) is associated with a nominal frequency of a specific frequency adapted to the category of the body it is equipping.

19. A device according to one of claims 15 to 18, characterized in that the first radar signal produced by the radar is suitable for a distance measurement according to their argument over transmission periods that are long as compared with the time equivalent of the accuracy sought for the distance.

20. A device according to one of claims 15 to 19, characterized in that the said responder comprises coding means capable of coding the second radar waves, and in that the radar comprises decoding means capable of decoding the incident second radar waves.

21. A device according to claim 20 taken in conjunction with claim 19, characterized in that the said coding is effected by a slow argument modulation.

22. A device according to one of claims 20 and 21, characterized in that the said coding concerns at least one of the data including the nature, speed, direction, acceleration and braking of the carrier of the responder.

23. A device according to one of claims 15 to 22, characterized in that the operating band is of the order of a gigahertz with a bandwidth of at least ten or so megahertz approximately.

24. A device according to one of claims 15 to 23, characterized in that the responders (T) are omnidirectional.

25. A device according to one of claims 15 to 24, characterized in that the responder (T) of a vehicle does not retransmit during the transmission of radar from the same vehicle.

26. A device according to one of claims 15 to 25, characterized in that the radar is omnidirectional in the receiving mode.

27. A device according to one of claims 15 to 26; characterized in that the radar is provided with multiple antennas (ARE, ARR) which are installed in the associated vehicle to permit directional selectivity.

28. A device according to one of claims 15 to 27, characterized in that the radar transmission is interrupted in the case of interference on reception of the incident second radar wave.

29. A device according to one of claims 15 to 28, characterized in that each responder (T) transmits the first radar signal transposed in frequency according to a single sideband modulation.

30. A device according to one of claims 15 to 29, characterized in that the radar producing means are capable of producing a carrier wave modulated by phase inversion according to a pseudorandom code that is selectively associated with the vehicle, the transmission means being capable of transmitting the said carrier wave modulated at chosen periodic moments, and the receiving means are capable of receiving every incident second radar wave with the said pseudorandom code, so as to obtain the measurement of the distance between the local vehicle and the vehicle having transposed the signal.

31. A device according to claim 30, characterized in that the radar producing means comprise:
   - means (SHF) for generating the said carrier wave (F$\phi$),
   - means (GPA) for generating a pseudorandom code (cpa) that is specific to the radar,
   - a modulator (ME) of the carrier wave by phase inversion according to the said pseudorandom code,
   - in that the transmission means (ARE) are arranged for transmitting the carrier wave thus modulated,
   - and the means (ARR) for receiving the radar return signal comprise:
   - a first demodulator (MR) of these returns by the said carrier wave, which provides returns in an intermediate frequency (FI),
   - a generator (OMI) of a local distance demodulation signal having at least one of the transposition frequencies of the responders (Ft$_1$, Ft$_2$), which is itself modulated by the said pseudorandom code that can be subjected to a time lag,
   - a second demodulator (DM1, AD1, DM2, AD2) of the returns at an intermediate frequency by the said local distance demodulation signal, and
   - means (UT) for displacing the said code until a predetermined phase relation is obtained after the second demodulation, the displacement then representing the distance of the responder concerned.

32. A device according to one of claims 15 to 31, characterized in that the radar producing means are capable of producing two adjacent selectively associated carrier waves (F$\phi \pm$ f) and the transmitting means are capable of simultaneously transmitting the said two carrier waves, and in that the receiving means are capable of receiving every incident second radar wave, and comprise means for measuring the phase deviation between the two incident radar waves, so as to obtain the measurement of the distance between the radar vehicle and the vehicle having transposed the signal.

33. A device according to claim 32, characterized in that the radar producing means comprise:
   - a generator (SHF) of the said pair of adjacent carrier waves (F$\phi$),
   - a generator (GFM) of an auxiliary frequency ($\pm$ f)
   - a modulator (ME) of the said pair of carrier waves by the auxiliary frequency ($\pm$ f),
   - in that the transmission means (ARE) are capable of transmitting the two carrier waves thus modulated,
   - and the means for receiving the return signals comprise:
   - a first demodulator (MR, AFR) of these returns by the pair of carrier waves, which provides returns in an intermediate frequency (FI),
   - a generator (MR1, MR2) of two local distance demodulation signals each having at least one of the transposition frequencies of the responders, which are themselves modulated by the auxiliary frequency (Ft$_1 \pm$ f; Ft$_2 \pm$ f),
   - a second separate demodulator (DM11, DM12; DM21, DM22) of the returns at the intermediate frequency by the said local distance demodulation signals,
   - filtering means (AD11, AD12; AD21, AD22) of the signals obtained after the second demodulation, the said signals then representing the distance of the responder concerned.

FIG.1

FIG.2

FIG.3

Tm

Tcpa

FIG.4A

Tcpa

15 Tcpa = Tr

FIG.4B

Tr

10 Tr = T e

FIG.4C

F φ    Ft₁    Ft₂

-7,5    +7,5    22,5    37,5    en MHz

FIG.5

FIG.6

FIG.7

FIG.8A

FIG.8B

FIG.9